# EUROPEAN PATENT SPECIFICATION

(11) **EP 4 475 299 B1**
(45) Date of publication and mention of the grant of the patent: **15.07.2026**
(21) Application number: 23900948.3
(22) Date of filing: 20.11.2023
(51) Int. Cl.: H01M 50/186, H01M 50/178, H01M 50/143, H01M 50/486, H01M 50/571, H01M 50/578

(54) **POUCH-TYPE BATTERY CELL AND BATTERY MODULE INCLUDING SAME**
BEUTELARTIGE BATTERIEZELLE UND BATTERIEMODUL DAMIT
ÉLÉMENT DE BATTERIE DE TYPE POCHE ET MODULE DE BATTERIE LE COMPRENANT

(30) Priority: 05.12.2022 KR 20220168017; 20.03.2023 KR 20230036123
(43) Date of publication of application: 11.12.2024
(73) Proprietor: LG Energy Solution, Ltd., Seoul 07335 (KR)
(72) Inventor: PARK, Jeong-Hoon, Daejeon 34122 (KR); JUNG, Hye-Mi, Daejeon 34122 (KR); KIM, Soo-Youl, Daejeon 34122 (KR)
(74) Representative: Plasseraud IP
(86) International application number: PCT/KR2023/018643
(87) International publication number: WO 2024/122929

(56) References cited:
- EP-A1- 3 267 512
- EP-A1- 3 396 738
- EP-A1- 3 627 581
- KR-A- 20080 094 602
- KR-A- 20140 091 222
- KR-A- 20150 062 820
- KR-A- 20160 147 145
- KR-A- 20220 050 643

## Description

### TECHNICAL FIELD

The present disclosure relates to a secondary battery, and more specifically, it relates to a pouch-type battery cell that generates little heat in fast charging or high output situations and has excellent safety against thermal events, and a battery module including the same.

The present application claims priority to Korean Patent Application No. 10-2022-0168017 filed on December 05, 2022 and Korean Patent Application No. 10-2023-0036123 filed on March 20, 2023 in the Republic of Korea.

### BACKGROUND ART

As technology development and demand for various mobile devices, electric vehicles, energy storage systems (ESSs), or the like significantly increase, interest in and demand for secondary batteries as an energy source are rapidly increasing. Although nickel-cadmium batteries or nickel-hydrogen batteries have conventionally been used widely as secondary batteries, nowadays, lithium secondary batteries are widely used because they have advantages of free charging and discharging due to almost no memory effect, a very low self-discharge rate, and a high energy density, compared to nickel-based secondary batteries.

The lithium secondary batteries generally use lithium-based oxides and carbon materials as positive and negative electrode active materials, respectively. The lithium secondary batteries include an electrode assembly in which the positive and negative electrode plates, which are respectively coated with the positive and negative electrode active materials, are disposed with a separator therebetween, and an exterior case, i.e., a battery case, that seals and stores the electrode assembly with an electrolyte.

The lithium secondary batteries may be classified, depending on the shape of the exterior case, into can-type secondary batteries in which the electrode assembly is accommodated in a metal can and pouch-type secondary batteries in which the electrode assembly is accommodated in a pouch of an aluminum laminate sheet.

These secondary batteries may generally be manufactured through processes of injecting an electrolyte into an exterior case having an electrode assembly stored therein and sealing the exterior case.

Compared to other types of secondary batteries, the pouch-type secondary batteries have the advantages of being easy to stack, being lightweight, and having a high energy density relative to volume, so they are highly preferred when manufacturing medium and large battery modules.

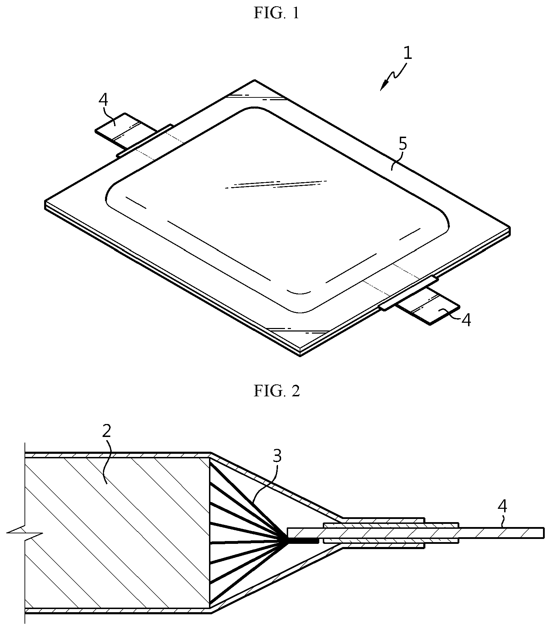

Referring to FIGS. 1 and 2, a pouch-type secondary battery 1 may include an electrode assembly, an electrode tab, an electrode lead, and an exterior pouch case.

The electrode tab may include positive electrode tabs extending from positive electrode plates of the electrode assembly and negative electrode tabs extending from negative electrode plates of the electrode assembly. The positive electrode tabs and negative electrode tabs may converge in a predetermined direction and may then be bonded to respective electrode leads corresponding thereto by resistance welding, ultrasonic welding, laser welding, or the like. The electrode lead may be exposed to the outside of the exterior pouch case and may function as an electrode terminal of the pouch-type secondary battery.

Meanwhile, in a conventional pouch-type secondary battery, as shown in FIG. 2, electrode tabs are collectively connected to one electrode lead. The above-described structure in which multiple electrode tabs (positive electrode tabs or negative electrode tabs) are connected to one electrode lead causes a bottleneck in current flow, which becomes an obstacle during high-speed charging and increases heat generation in high output situations.

In addition, the pouch-type battery cell may generate gas therein during thermal runaway, and if the internal pressure of the pouch-type battery cell exceeds a limit pressure that a sealing portion (S) is able to withstand, the sealing portion (S) may open, so that high-temperature gases and particles may be ejected explosively at once due to high pressure. (Here, the particles indicate electrode pieces or active materials separated from the electrode assembly) The high-pressure and high-temperature gases and particles ejected from the pouch-type battery cell may cause thermal damage to other pouch-type battery cells adjacent thereto or the surrounding environment. Therefore, a pouch-type battery cell capable of preventing explosion in thermal events is required to be developed.

EP3267512A1 discloses a secondary battery having improved safety. EP3627581A1 discloses a pouch type secondary battery. EP3396738A1 discloses a battery cell having double welding structure.

### DISCLOSURE

### Technical Problem

The present disclosure has been designed to solve the problems of the related art, and therefore the present disclosure is directed to providing a pouch-type battery cell that generate less heat in fast charging and high output situations and has excellent safety against thermal events, and a battery module including the same.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a pouch-type battery cell including: an electrode assembly configured such that positive electrode plates and negative electrode plates are repeatedly arranged to face each other with a separator interposed therebetween; an exterior pouch case configured to store the electrode assembly to be sealed; and electrode leads connected to a bundle of electrode tabs extending from the electrode assembly inside the exterior pouch case and protruding to the outside of the exterior pouch case, wherein the electrode leads include a first electrode lead and a second electrode lead that face each other, extend in the same direction, and have the same polarity, and wherein a rupture sealing member may be provided between the first electrode lead and the second electrode lead such that one side thereof is bonded to the first electrode lead and the other side is bonded to the second electrode lead.

The bundle of electrode tabs is divided into two bundles and include a first bundle of electrode tabs and a second bundle of electrode tabs, and the first bundle of electrode tabs is connected to the first electrode lead and the second bundle of electrode tabs is connected to the second electrode lead.

The first electrode lead and the second electrode lead may be configured to be separated from each other inside the exterior pouch case.

The exterior pouch case may include a sealing portion formed by heat-fusing the edges thereof, and the sealing portion may include a first lead film configured to bond the first electrode lead and the exterior pouch case to each other, and a second lead film configured to bond the second electrode lead and the exterior pouch case to each other.

The bonding strength of the rupture sealing member may be lower than that of the first lead film or the second lead film.

The rupture sealing member may extend to the outside of the exterior pouch case together with the first electrode lead and the second electrode lead.

The rupture sealing member may be made of a material that is thermally deformed and disappears at a predetermined temperature or more.

The first electrode lead and the second electrode lead may be bonded by a conductive adhesive at the outside of the exterior pouch case.

The rupture sealing member may have a hole through which the conductive adhesive passes.

According to another aspect of the present disclosure, there is provided a battery module including the pouch-type battery cell described above.

### Advantageous Effects

According to one aspect of the present disclosure, it is possible to provide a pouch-type battery cell that generate less heat in fast charging and high output situations and has excellent safety against thermal events, and a battery module including the same.

In addition, the present disclosure may have various other effects, and these will be described in the respective embodiments, or description of effects that may be easily inferred by those skilled in the art will be omitted.

### DESCRIPTION OF DRAWINGS

FIG. 1 is a perspective view schematically illustrating a pouch-type battery cell according to the prior art.
FIG. 2 is a partially cross-sectional view schematically illustrating a pouch-type battery cell according to the prior art.
FIG. 3 is a perspective view schematically illustrating a pouch-type battery cell according to an embodiment of the present disclosure.
FIG. 4 is a diagram schematically illustrating the bonding structure of an electrode lead and an electrode tab according to an embodiment of the present disclosure.
FIG. 5 is a partially cross-sectional view schematically illustrating the pouch-type battery cell in FIG. 3.
FIG. 6 is a partially cross-sectional view illustrating a change in state when the internal pressure of the pouch-type battery cell in FIG. 3 increases.
FIGS. 7 and 8 are partially cross-sectional views respectively illustrating the states before and after an increase in internal pressure of a pouch-type battery cell according to another embodiment of the present disclosure.
FIGS. 9 and 10 are partially cross-sectional views respectively illustrating the states before and after an increase in internal pressure of a pouch-type battery cell according to another embodiment of the present disclosure.

### BEST MODE

Hereinafter, preferred embodiments of the present disclosure will be described in detail with reference to the accompanying drawings.

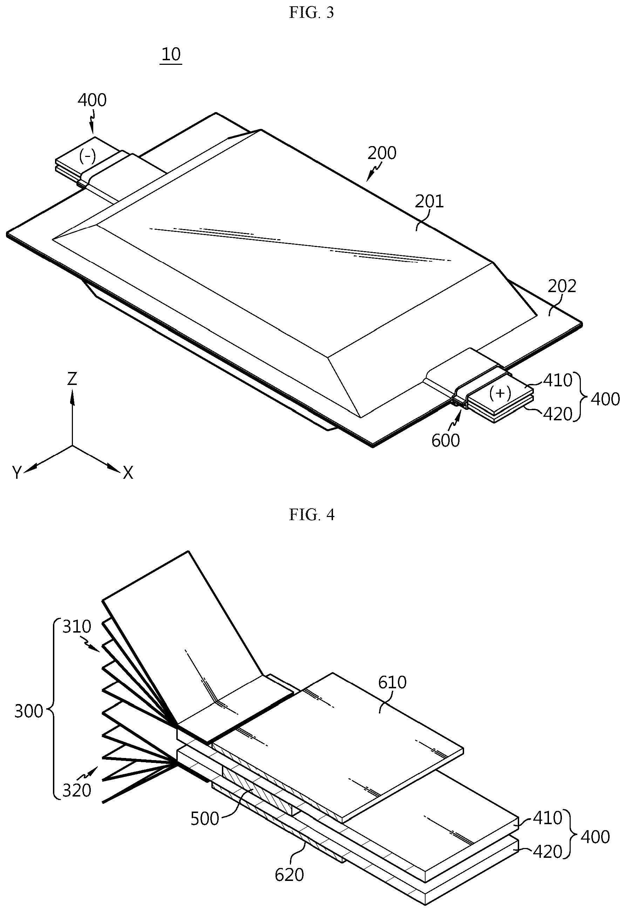

Referring to FIGS. 3 to 5, a pouch-type battery cell 10 according to an embodiment of the present disclosure includes an electrode assembly 100, an exterior pouch case 200, a bundle of electrode tabs 300, an electrode lead 400, and a rupture sealing member 500.

The electrode assembly 100 is comprised of a positive electrode plate 110, a negative electrode plate 130, and a separator 120, and has a structure in which the positive electrode plate 110 and the negative electrode plate 130 are repeatedly arranged to face each other with the separator 120 interposed therebetween.

That is, the electrode assembly 100 may be configured in any structure in which the positive electrode plate 110 and the negative electrode plate 130 are repeatedly arranged with the separator 120 interposed therebetween, such as a stack type in which electrode plates and the separators 120 are sequentially laminated in the form of positive electrode plate 110/separator 120/negative electrode plate 130/separator 120, a folding type in which the separator 120 is wound such that the separator 120 is located between the positive electrode plate 110 and the negative electrode plate 130, or a stack and folding type that is a combination of the stack type and the folding type.

The positive electrode plate 110 may be formed by applying a positive electrode active material to a current collector plate made of aluminum (Al), and the negative electrode plate 130 may be formed by applying a negative electrode active material to a current collector plate made of copper (Cu). The positive electrode active material or negative electrode active material may be formed by stirring granular active materials, auxiliary conductors, binders, and plasticizers in a solvent.

The positive electrode plate 110 and the negative electrode plate 130 are configured in a plate and are spaced apart such that the plate surfaces face each other. The separator 120 is interposed between the positive electrode plate 110 and the negative electrode plate 130 to prevent direct contact between the positive electrode plate 110 and the negative electrode plate 130. The separator 120 is configured in a porous structure to allow charges to move between the positive electrode plate 110 and the negative electrode plate 130 during charging or discharging.

The exterior pouch case 200 has a multi-layer structure in which an outermost outer resin layer made of an insulating material such as polyethylene terephthalate (PET) or nylon, a metal layer made of aluminum to provide mechanical strength and prevent moisture and oxygen from entering, and an internal resin layer made of a polyolefin-based material that has heat adhesive properties to serve as a sealing material are laminated.

The exterior pouch case 200 may be classified into a one-piece type in which one pouch sheet is folded to surround the electrode assembly 100 and a two-piece type in which two pouch sheets are folded to surround the electrode assembly 100. In the one-piece-type exterior pouch case 200, a recess is formed by forming an area of one pouch sheet, and the electrode assembly 100 is stored in the recess, and then the pouch sheet is folded to cover the electrode assembly 100. Then, the edges of the overlapping portion of the pouch sheet, excluding the folded portion, are heat-fused to be sealed. Accordingly, the one-piece-type exterior pouch case 200 has a receiving portion 201 that accommodates the electrode assembly and a sealing portion 202 in which three edges of the receiving portion 201 are sealed. Meanwhile, the two-piece-type exterior pouch case 200 includes two pouch sheets, that is, an upper pouch sheet 210 and a lower pouch sheet 220. For example, the lower pouch sheet 220 is formed to produce a recess, and the electrode assembly 100 is stored in the recess, and then the electrode assembly 100 is covered with the upper pouch sheet 210. Then, the overlapping edges of the upper pouch sheet 210 and the lower pouch sheet 220 are heat-fused to be sealed. Accordingly, the two-piece-type exterior pouch case 200 has a receiving portion 201 that accommodates the electrode assembly and a sealing portion 202 in which all four edges of the receiving portion 201 are sealed.

Therefore, the pouch-type battery cell 10 generally has a sealing portion 202 on at least one of the front and rear sides where the electrode lead 400 is located and the left and right sides in the width direction. In particular, a part of the sealing portion 202 where the electrode lead 400 protrudes is also called a cell terrace, and the part where the electrode lead 400 does not protrude is called a side wing. For reference, the side wings of the pouch-type battery cell 10 are folded to reduce its size.

The electrode tap includes a positive electrode tap provided on an area (uncoated area) on which the positive electrode active material is not applied in the positive electrode plate 110, and a negative electrode tap provided on an area (uncoated area) on which the negative electrode active material is not applied in the negative electrode plates 130. A plurality of electrode taps may be provided, and the electrode taps of the same polarity may extend in the same direction from one side of the electrode assembly 100 and the ends thereof may converge to form a bundle of electrode tabs 300, which is bonded to the electrode lead 400.

The electrode lead 400 may be configured to be connected to the bundle of electrode tabs 300 and protrude to the outside of the exterior pouch case 200, thereby functioning as an electrode terminal of the pouch-type battery cell 10.

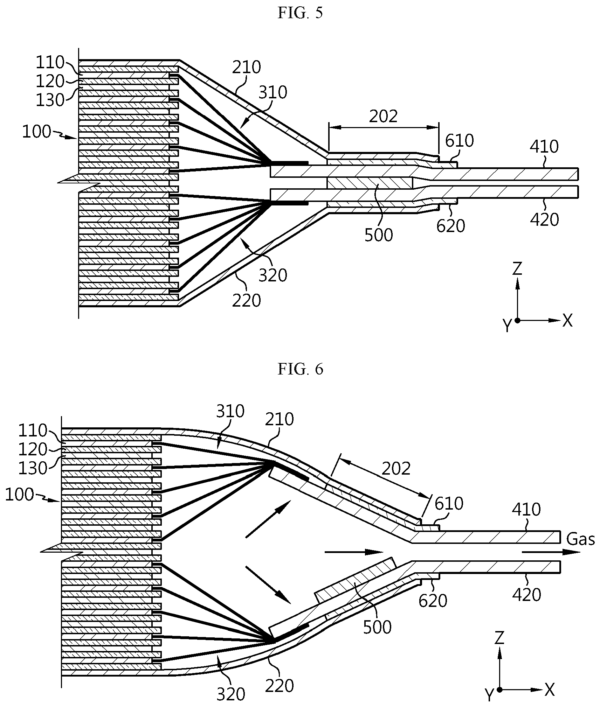

In particular, referring to FIGS. 4 and 5, the electrode lead 400 according to an embodiment of the present disclosure includes a first electrode lead 410 and a second electrode lead 420, which face each other, extend in the same direction, and have the same polarity. Additionally, a rupture sealing member 500 may be interposed between the first electrode lead 410 and the second electrode lead 420. The rupture sealing member 500 may have one side bonded to the first electrode lead 410 and the other side (opposite side) bonded to the second electrode lead 420 such that the first electrode lead 410 and the second electrode lead 420 are spaced apart from each other.

According to the implemented configuration of the present disclosure, as will be described in detail later, since the electrode taps are divided and bonded to the electrode leads 400 comprised of the first electrode lead 410 and the second electrode lead 420, the bottleneck phenomenon for the charge/discharge current may be alleviated, so that heat generation may be reduced and electrical safety may be improved in fast charging and high output situations. In addition, if a thermal event occurs, the rupture sealing member 500 may rupture by internal pressure to allow gas to be discharged between the first electrode lead 410 and the second electrode lead 420, thereby dispersing or relieving the pressure and preventing explosion of the pouch-type battery cell 10.

Specifically, the pouch-type battery cell 10 according to an embodiment of the present disclosure may be configured to have two positive electrode leads 400 that function as positive electrode terminals, and two negative electrode leads 400 that functions as negative electrode terminals, as shown in FIG. 3. Here, the two positive electrode leads 400 may be divided into a first positive electrode lead 410 and a second positive electrode lead 420, and the two negative electrode leads 400 may be divided into a first negative electrode lead 410 and a second negative electrode lead 420.

There is little structural difference between the two positive electrode leads 400 and the two negative electrode leads 400. Therefore, in the following description, the first electrode lead 410 and the second electrode lead 420 may indicate two positive electrode leads 400 or two negative electrode leads 400. In addition, the electrode tap includes a positive electrode tap extending from the positive electrode plate 110 and a negative electrode tap extending from the negative electrode plate 130 of the electrode plates.

As shown in FIG. 5, the positive electrode taps extend from the respective positive electrode plates 110 and the ends thereof converge to form a bundle of positive electrode taps and are then bonded to the positive electrode lead 400. Although not shown, the negative electrode taps extend from the respective negative electrode plates 130 and the ends thereof converge to form a bundle of negative electrode taps and are then bonded to the negative electrode lead 400. Accordingly, in the following description, the electrode tap may indicate a positive electrode tap or negative electrode tap, and the bundle of electrode tabs 300 may indicate a bundle of positive electrode taps or a bundle of negative electrode taps.

Referring back to FIGS. 4 and 5, in the pouch-type battery cell 10 according to the present invention the bundle of electrode tabs 300 is divided into two bundles. That is, the bundle of electrode tabs 300 includes a first bundle of electrode tabs 310 and a second bundle of electrode tabs 320. In addition, the first bundle of electrode tabs 310 is connected to the first electrode lead 410, and the second bundle of electrode tabs 320 is connected to the second electrode lead 420. The first electrode lead 410 and the second electrode lead 420 are configured to be separated from each other by the rupture sealing member 500 and connected to the first bundle of electrode tabs 310 and the second bundle of electrode tabs 320, respectively, at least inside the exterior pouch case 200.

As described above, since the electrode taps are divided into two bundles and respectively bonded to two electrode leads 400 of the same polarity, the bottleneck in the current flow may be alleviated in charging and discharging of the pouch-type battery cell 10. Therefore, the pouch-type battery cell 10 according to the present disclosure may significantly reduce heat generation in fast charging or high output situations, compared to the conventional pouch-type battery cell (see FIGS. 1 and 2).

Meanwhile, the pouch-type battery cell 10 according to the present disclosure, as shown in FIG. 5, may include a rupture sealing member 500 interposed between the first electrode lead 410 and the second electrode lead 420. The rupture sealing member 500 may be an adhesive resin composition. For example, the rupture sealing member 500 may be formed by curing an adhesive resin composition previously applied between the first electrode lead 410 and the second electrode lead 420.

This rupture sealing member 500 may serve to support the first electrode lead 410 and the second electrode lead 420 to be spaced apart from each other inside the exterior pouch case 200 and serve as a sealing material to prevent the electrolyte from leaking through the gap between the first electrode lead 410 and the second electrode lead 420.

The exterior pouch case 200 has the sealing portion 202 obtained by heat-fusing the edges thereof as described above. A lead film 600 may be used in a portion of the sealing portion 202 where the electrode lead 400 protrudes in order to increase bonding strength between the exterior pouch case 200 and the electrode lead 400.

The lead film 600 has a structure for surrounding the outer surface of the electrode lead 400 located in the sealing portion 202. This lead film 600 is bonded to the exterior pouch case 200 when heat-fusing the edges of the exterior pouch case 200, thereby providing high sealing strength between the electrode lead 400 and the sealing portion 202.

In this embodiment, the lead film 600, as shown in FIG. 5, includes a first lead film 610 bonded to the first electrode lead 410 and the upper pouch sheet 210 of the exterior pouch case 200, and a second lead film 620 bonded to the second electrode lead 420 and the lower pouch sheet 220 of the exterior pouch case 200.

Together with the first lead film 610 and the second lead film 620, the rupture sealing member 500 seals the gap between the first electrode lead 410 and the second electrode lead 420 in the sealing portion 202.

Meanwhile, the rupture sealing member 500 according to an embodiment of the present disclosure may be made of a material having a lower bonding strength than the first lead film 610 or the second lead film 620.

According to this configuration of the rupture sealing member 500, if gas is generated inside the pouch-type battery cell 10 due to a thermal event, the rupture sealing member 500 may rupture or break first at an internal pressure lower than the limit pressure that the sealing portion 202 is able to withstand, so that the gap between the first electrode lead 410 and the second electrode lead 420 may open. Therefore, compared to the conventional pouch-type battery cell 10 with the structure shown in FIG. 2, gases, particles, or the like generated inside the battery cell may be discharged to the outside under lower pressure, thereby preventing explosion of the pouch-type battery cell 10.

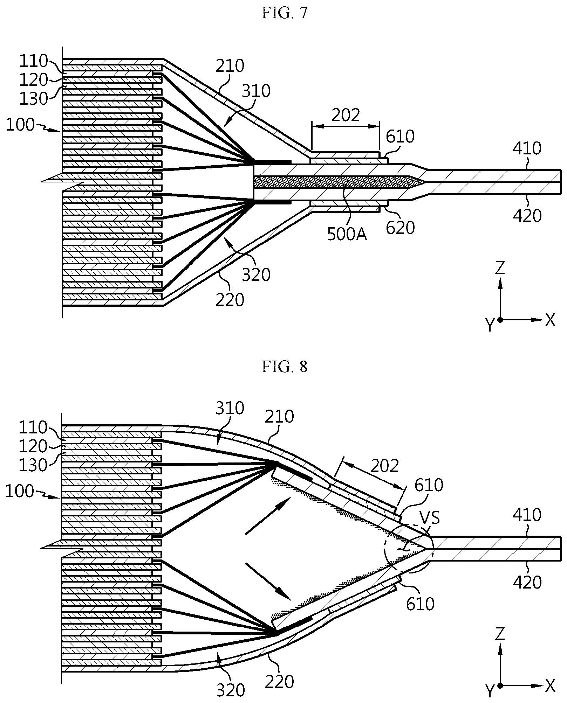

FIGS. 7 and 8 are partially cross-sectional views respectively illustrating the states before and after an increase in internal pressure of a pouch-type battery cell 10 according to another embodiment of the present disclosure.

Next, a pouch-type battery cell 10 according to another embodiment of the present disclosure will be described with reference to FIGS. 7 and 8. The same reference numerals as those in the above-described embodiment indicate the same elements, so redundant descriptions thereof will be omitted, and a description will be made based on the differences from the above-described embodiment.

Referring to FIGS. 7 and 8, in the pouch-type battery cell 10 according to another embodiment of the present disclosure, a rupture sealing member 500A may be configured to extend to the outside of the exterior pouch case 200 along with the first electrode lead 410 and the second electrode lead 420. That is, the rupture sealing member 500A may be configured to extend to the outside of the sealing portion 202. The first electrode lead 410 and the second electrode lead 420 may extend longer than the rupture sealing member 500A. The first electrode lead 410 and the second electrode lead 420 may be used separately as respective electrode terminals, or may come into contact with each other to overlap and function as one electrode terminal, as shown in FIG. 7.

In particular, the rupture sealing member 500A of this embodiment may be made of a material that is thermally deformed and disappears at a predetermined temperature or more. In this case, if heat and pressure act on the rupture sealing member 500A due to a thermal event occurring inside the pouch-type battery cell 10, the rupture sealing member 500A may be thermally melted and disappear. Then, inside the exterior pouch case 200, the gap between the first electrode lead 410 and the second electrode lead 420 may further widen, and as shown in FIG. 8, and the portion of the rupture sealing member 500A exposed to the outside of the sealing portion 202 along with the first electrode lead 410 and the second electrode lead 420 may disappear, thereby forming a venting space outside the sealing portion 202. Therefore, gases, particles, or the like may be discharged to the outside of the exterior pouch case 200 (in the Y-axis direction intersecting the X-axis and Z-axis in FIG. 8) through the venting space.

In this embodiment, a venting space VS may be secured as described above in the case, for example, where the tips of the first electrode lead 410 and the second electrode lead 420 are strongly bonded and do not open or where the tips of the first electrode lead 410 and the second electrode lead 420 are integrally welded to a conductor such as a bus-bar (not shown), thereby relieving the internal pressure of the pouch-type battery cell 10.

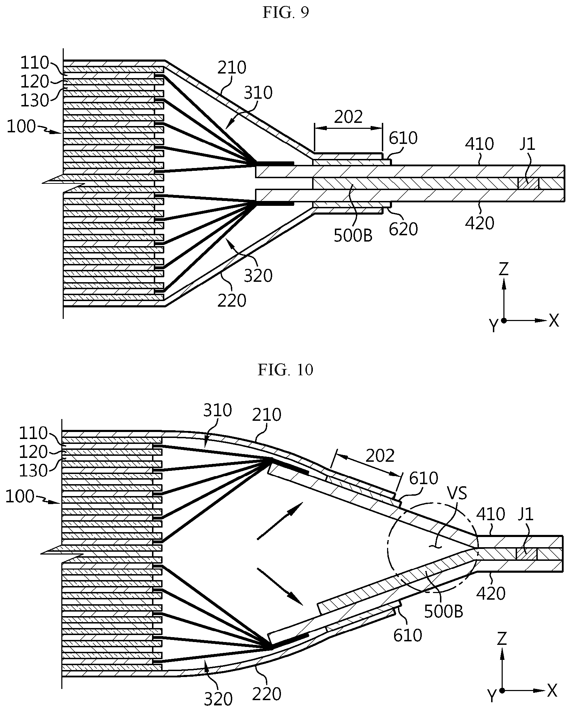

FIGS. 9 and 10 are partially cross-sectional views respectively illustrating the states before and after an increase in internal pressure of a pouch-type battery cell 10 according to another embodiment of the present disclosure.

The pouch-type battery cell 10 according to another embodiment of the present disclosure may be configured, compared to the above-described embodiments, such that a rupture sealing member 500B extends substantially the same as the first electrode lead 410 and the second electrode lead 420 to the outside of the sealing portion 202.

In addition, the first electrode lead 410 and the second electrode lead 420, which are exposed to the outside of the exterior pouch case 200, may be configured to conduct electricity to each other even if there is the rupture sealing member 500B therebetween. For example, as shown in FIG. 9, the first electrode lead 410 and the second electrode lead 420 may be bonded to each other by a conductive adhesive J1 at the outside of the exterior pouch case 200. Here, the conductive adhesive J1 may be, for example, silver (Ag) nano ink.

In addition, the rupture sealing member 500B may include a hole to be filled with the conductive adhesive J1. That is, the hole may be filled with the conductive adhesive J1 so that the first electrode lead 410 and the second electrode lead 420 are fixed and conduct electricity to each other.

Therefore, according to this embodiment, two electrode leads 400 having the same polarity may be used as a single electrode lead 400. In addition, if heat and pressure act on the rupture sealing member 500B due to a thermal event occurring inside the pouch-type battery cell 10, the rupture sealing member 500B may be thermally melted or its bonding strength may deteriorate, causing the gap between the first electrode lead 410 and the second electrode lead 420 to further widen inside the exterior pouch case 200, so the portion of the rupture sealing member 500B, which is exposed to the outside of the sealing portion 202 along with the first electrode lead 410 and the second electrode lead 420, may open, as shown in FIG. 10, to form a venting space VS outside the sealing portion 202. Therefore, gases, particles, or the like may be discharged to the outside of the exterior pouch case 200 (in the Y-axis direction intersecting the X-axis and Z-axis in FIG. 10) through the venting space VS.

Meanwhile, a battery module according to the present disclosure may be configured to include the above-described pouch-type battery cells 10, a bus-bar frame assembly for electrically connecting the pouch-type battery cells 10, and a module case having an inner space for accommodating the pouch-type battery cells 10. In addition, the battery module may further have venting holes provided on at least one side of the module case to discharge gas emitted from the pouch-type battery cells 10 to the outside of the module case. It may be configured to include the module case accommodating the pouch-type battery cells 10.

At least one or more battery modules according to the present disclosure may be applied to a battery pack. That is, a battery pack according to the present disclosure may include one or more battery modules described above. Additionally, the battery pack according to the present disclosure may be applied to vehicles such as electric vehicles. In other words, a vehicle according to the present disclosure may include at least one or more battery packs according to the present disclosure.

As described above, although the present disclosure has been described with reference to limited embodiments and drawings, the present disclosure is not limited thereto, and various modifications and variations are possible within the claims to be described below by those skilled in the art to which the present disclosure pertains.

## Claims

1. A pouch-type battery cell (10) comprising:
an electrode assembly (100) configured such that positive electrode plates (110) and negative electrode plates (130) are repeatedly arranged to face each other with a separator (120) interposed therebetween;
an exterior pouch case (200) configured to store the electrode assembly to be sealed; and
electrode leads (400) connected to a bundle of electrode tabs (300) extending from the electrode assembly inside the exterior pouch case and protruding to the outside of the exterior pouch case,
wherein the electrode leads comprise a first electrode lead (410) and a second electrode lead (420) that face each other, extend in the same direction, and have the same polarity, and
wherein a rupture sealing member (500) is provided between the first electrode lead and the second electrode lead such that one side thereof is bonded to the first electrode lead and the other side is bonded to the second electrode lead.
**characterized in that** the bundle of electrode tabs is divided into two bundles and comprises a first bundle of electrode tabs (310) and a second bundle of electrode tabs (320), and
wherein the first bundle of electrode tabs is connected to the first electrode lead and the second bundle of electrode tabs is connected to the second electrode lead.

2. The pouch-type battery cell according to claim 1,
wherein the first electrode lead and the second electrode lead are separated from each other inside the exterior pouch case.

3. The pouch-type battery cell according to claim 1,
wherein the exterior pouch case comprises a sealing portion (202) formed by heat-fusing the edges thereof, and
wherein the sealing portion comprises a first lead film (610) configured to bond the first electrode lead and the exterior pouch case to each other, and a second lead film (620) configured to bond the second electrode lead and the exterior pouch case to each other.

4. The pouch-type battery cell according to claim 3,
wherein the bonding strength of the rupture sealing member is lower than that of the first lead film or the second lead film.

5. The pouch-type battery cell according to claim 3,
wherein the rupture sealing member extends to the outside of the exterior pouch case together with the first electrode lead and the second electrode lead.

6. The pouch-type battery cell according to claim 5,
wherein the rupture sealing member (500A) is made of a material that is thermally deformed and disappears at a predetermined temperature or more.

7. The pouch-type battery cell according to claim 5,
wherein the first electrode lead and the second electrode lead (J1) are bonded by a conductive adhesive at the outside of the exterior pouch case.

8. The pouch-type battery cell according to claim 7,
wherein the rupture sealing member (500B) has a hole through which the conductive adhesive passes.

9. A battery module comprising the pouch-type battery cell according to any one of claims 1 to 8.

## Patentansprüche

1. Pouch-Typ-Batteriezelle (10), umfassend:
eine Elektrodenanordnung (100), die so konfiguriert ist, dass positive Elektrodenplatten (110) und negative Elektrodenplatten (130) wiederholt so angeordnet sind, dass sie einander gegenüberliegen, wobei ein Separator (120) dazwischen angeordnet ist;
ein äußeres Pouch-Gehäuse (200), das konfiguriert ist, um die zu versiegelnde Elektrodenanordnung aufzunehmen;
und
Elektrodenableitungen (400), die mit einem Bündel von Elektrodenfahnen (300) verbunden sind, die sich von der Elektrodenanordnung innerhalb des äußeren Pouch-Gehäuses erstrecken und zur Außenseite des äußeren Pouch-Gehäuses vorstehen,
wobei die Elektrodenableitungen eine erste Elektrodenableitung (410) und eine zweite Elektrodenableitung (420) umfassen, die einander gegenüberliegen, sich in derselben Richtung erstrecken und dieselbe Polarität aufweisen, und
wobei ein Berstsiegelelement (500) zwischen der ersten Elektrodenableitung und der zweiten Elektrodenableitung derart vorgesehen ist, dass eine Seite davon mit der ersten Elektrodenableitung verbunden ist und die andere Seite mit der zweiten Elektrodenableitung verbunden ist,
**dadurch gekennzeichnet, dass** das Bündel von Elektrodenfahnen in zwei Bündel unterteilt ist und ein erstes Bündel von Elektrodenfahnen (310) und ein zweites Bündel von Elektrodenfahnen (320) umfasst,
und
wobei das erste Bündel von Elektrodenfahnen mit der ersten Elektrodenableitung verbunden ist und das zweite Bündel von Elektrodenfahnen mit der zweiten Elektrodenableitung verbunden ist.

2. Pouch-Typ-Batteriezelle nach Anspruch 1,
wobei die erste Elektrodenableitung und die zweite Elektrodenableitung innerhalb des äußeren Pouch-Gehäuses voneinander getrennt sind.

3. Pouch-Typ-Batteriezelle nach Anspruch 1,
wobei das äußere Pouch-Gehäuse einen Siegelabschnitt (202) umfasst, der durch Heißsiegeln seiner Kanten gebildet wird, und
wobei der Siegelabschnitt eine erste Ableitungsfolie (610), die konfiguriert ist, um die erste Elektrodenableitung und das äußere Pouch-Gehäuse miteinander zu verbinden, und eine zweite Ableitungsfolie (620) umfasst, die konfiguriert ist, um die zweite Elektrodenableitung und das äußere Pouch-Gehäuse miteinander zu verbinden.

4. Pouch-Typ-Batteriezelle nach Anspruch 3,
wobei die Haftfestigkeit des Berstsiegelelements geringer ist als die der ersten Ableitungsfolie oder der zweiten Ableitungsfolie.

5. Pouch-Typ-Batteriezelle nach Anspruch 3,
wobei sich das Berstsiegelelement zusammen mit der ersten Elektrodenableitung und der zweiten Elektrodenableitung zur Außenseite des äußeren Pouch-Gehäuses erstreckt.

6. Pouch-Typ-Batteriezelle nach Anspruch 5,
wobei das Berstsiegelelement (500A) aus einem Material besteht, das sich bei einer vorbestimmten Temperatur oder mehr thermisch verformt und verschwindet.

7. Pouch-Typ-Batteriezelle nach Anspruch 5,
wobei die erste Elektrodenableitung und die zweite Elektrodenableitung (J1) durch einen leitfähigen Klebstoff an der Außenseite des äußeren Pouch-Gehäuses verbunden sind.

8. Pouch-Typ-Batteriezelle nach Anspruch 7,
wobei das Berstsiegelelement (500B) ein Loch aufweist, durch das der leitfähige Klebstoff hindurchtritt.

9. Batteriemodul, umfassend die Pouch-Typ-Batteriezelle nach einem der Ansprüche 1 bis 8.

## Revendications

1. Une cellule de batterie de type poche (10) comprenant :
un ensemble d'électrodes (100) configuré de telle sorte que des plaques d'électrode positive (110) et des plaques d'électrode négative (130) sont agencées de manière répétée pour se faire face avec un séparateur (120) interposé entre elles ;
un boîtier de poche extérieur (200) configuré pour stocker l'ensemble d'électrodes à sceller ;
et
des sorties d'électrode (400) connectées à un faisceau de languettes d'électrode (300) s'étendant depuis l'ensemble d'électrodes à l'intérieur du boîtier de poche extérieur et faisant saillie vers l'extérieur du boîtier de poche extérieur,
dans laquelle les sorties d'électrode comprennent une première sortie d'électrode (410) et une seconde sortie d'électrode (420) qui se font face, s'étendent dans la même direction, et ont la même polarité, et
dans laquelle un élément de scellement à rupture (500) est prévu entre la première sortie d'électrode et la seconde sortie d'électrode de telle sorte qu'un côté de celui-ci est lié à la première sortie d'électrode et l'autre côté est lié à la seconde sortie d'électrode.
**caractérisée en ce que** le faisceau de languettes d'électrode est divisé en deux faisceaux et comprend un premier faisceau de languettes d'électrode (310) et un second faisceau de languettes d'électrode (320),
et
dans laquelle le premier faisceau de languettes d'électrode est connecté à la première sortie d'électrode et le second faisceau de languettes d'électrode est connecté à la seconde sortie d'électrode.

2. La cellule de batterie de type poche selon la revendication 1,
dans laquelle la première sortie d'électrode et la seconde sortie d'électrode sont séparées l'une de l'autre à l'intérieur du boîtier de poche extérieur.

3. La cellule de batterie de type poche selon la revendication 1,
dans laquelle le boîtier de poche extérieur comprend une partie de scellement (202) formée par thermosoudage de ses bords, et
dans laquelle la partie de scellement comprend un premier film de sortie (610) configuré pour lier la première sortie d'électrode et le boîtier de poche extérieur l'un à l'autre, et un second film de sortie (620) configuré pour lier la seconde sortie d'électrode et le boîtier de poche extérieur l'un à l'autre.

4. La cellule de batterie de type poche selon la revendication 3,
dans laquelle la résistance de liaison de l'élément de scellement à rupture est inférieure à celle du premier film de sortie ou du second film de sortie.

5. La cellule de batterie de type poche selon la revendication 3,
dans laquelle l'élément de scellement à rupture s'étend vers l'extérieur du boîtier de poche extérieur conjointement avec la première sortie d'électrode et la seconde sortie d'électrode.

6. La cellule de batterie de type poche selon la revendication 5,
dans laquelle l'élément de scellement à rupture (500A) est fait d'un matériau qui est déformé thermiquement et disparaît à une température prédéterminée ou plus.

7. La cellule de batterie de type poche selon la revendication 5,
dans laquelle la première sortie d'électrode et la seconde sortie d'électrode (J1) sont liées par un adhésif conducteur à l'extérieur du boîtier de poche extérieur.

8. La cellule de batterie de type poche selon la revendication 7,
dans laquelle l'élément de scellement à rupture (500B) a un trou à travers lequel l'adhésif conducteur passe.

9. Un module de batterie comprenant la cellule de batterie de type poche selon l'une quelconque des revendications 1 à 8.
